# EUROPEAN PATENT APPLICATION

(11) **EP 3 147 817 A1**
(43) Date of publication of application: **29.03.2017**
(21) Application number: 16020319.6
(22) Date of filing: 31.08.2016
(51) Int. Cl.: G06K 9/00, G06K 9/62

(54) **METHOD AND APPARATUS FOR VIDEO AND IMAGE MATCH SEARCHING**

(30) Priority: 31.08.2015 US 201562212300 P
(71) Applicant: Adfamilies Publicidade, S.A., 1250-008 Lisboa (PT)
(72) Inventor: Banheiro Moutinho, Nuno Miguel, 2785-277 S. Domingos de Rana (PT)
(74) Representative: Stilwell d'Andrade, Vasco

(57) **Abstract**

A method of finding a match in a match database with a target media includes receiving a target media item, wherein the target media item comprises one or more pictures or videos, extracting multiple visual descriptors from the target media item, formulating descriptor vectors from the multiple visual descriptors, reducing the dimension of the descriptor vectors to generate projected descriptors, creating cluster keys from the projected descriptors, and generating a list of a number of matches by comparing the cluster keys of the target media item with keys of sequences stored in the matching database. A corresponding apparatus is also claimed.

## Description

### BACKGROUND OF THE INVENTION

### Field of the Invention

The present invention relates to image and video recognition.

### Description of Prior Art and Identification of Technical Problems to be Solved

As the availability of camera-equipped phones increased over the years, so has the number of videos or images being snapped, shared and stored by users of such devices. In addition, more and more devices used by users are now able to play back video and display images to users. For example, smartphones, tablet computers, virtual reality eyeglasses, computers, laptops, etc. have a way by which media, e.g., video or images, can be received by a user device and a screen on which the received media is displayed to a user.

Image recognition is a very well-known problem among the computer vision community. There are several methods suitable to deal with this problem, with more or less accuracy and speed, using information that can be retrieved from the input images such as colors, shapes, textures, edges or objects. However, the images space is huge. Considering all the human beings that exist or ever existed in the world and combining together all the images each one of them has ever seen during their lifetime, corresponds to just a tiny sub-space of the global images space. Thus it is important to find some "hidden" information in the images to make them more unique and distinguishable.

Basic image information, such as color or edges, can be combined in order to generate more complex and unique properties, namely visual descriptors. When comparing two images, it is beneficial that visual descriptors provide the same information under the same conditions (robustness).

However there is often a trade-off between the quality of the visual descriptors and how fast they can be obtained by computer based analysis of images. On one hand, some visual descriptors, such as image templates, e.g., small regions directly taken from the image, depend largely on the external conditions where the image was taken, e.g., luminance, quality of an image sensor that receives and records the image, the resolution of the image, rotation of the sensor and its distance to target point, and, although they are very fast to obtain, can lead to bad results in the matching since the information on the descriptors is slightly different. On the other hand, more complex visual descriptors, such as SIFT descriptors (Scale-Invariant Feature Transform), SURF descriptors (Speeded Up Robust Features) or ORB descriptors (Oriented Fast and Rotated BRIEF) are very robust to rotation and/or zoom, but due to their complexity, it takes more computational time to obtain. This robustness, however, is useful when performing image matching so an image, taken from different viewpoints or under different conditions, can be correctly matched to a similar one.

Conventional techniques based on complex visual descriptors, however, run into limitations when the searching space is very large (e.g., tens of thousands of descriptors). Considering an input image with N visual descriptors and a searching space with K images with M visual descriptors each, the processing time to compare this image with all the K images is O(N x K x M). It is easy to see that for a very large K (+1,000,000 images), it becomes computationally hard to process. One way to deal with a very large searching space is to reduce the search space to smaller sub-spaces hopefully containing all the information about the image that is being looked for.

Many works have addressed the problem of searching and matching one image within a database of thousands or millions of other images or videos. Vocabulary trees have been used in several approaches, such as the ones described by Nister and Stewenius in "Scalable Recognition with a Vocabulary Tree" and by Sivic and Zisserman in "Video Google: A Text Retrieval Approach to Object Matching in Videos." These two approaches are able to search and retrieve images within a database of tens of thousands of images and videos in a fraction of a second. They use a k-means as a basis of their system, to cluster the descriptors and build the vocabulary tree, which largely depends on the training set that will define the centers of each cluster. During the training phase, which is done in an offline manner, the clusters space is not guaranteed to uniformly cover all the descriptors space, which can lead in some cases to some crowded areas. In addition, it is known k-means can be very slow to converge, taking exponential time to achieve that state which depends on k and the number of descriptors to be clustered. To uniformly cover all the descriptors space the k-means would need a very large training set which would take a long time to converge to a final clustering solution, rising questions about the true scalability of the system.

A different approach, for events and activities recognition in videos, is described by Chen and Medasini in "Hierarchical Video Search and Recognition System". This system relies on spatiotemporal information from video sequences to search and retrieve a match for a certain input (video sequence) containing a certain occurring event or activity. It extracts video content descriptors from moving objects, events or activities during certain temporal windows and within certain spatial regions. The architecture of this system was designed specifically for video detection, where temporal information is crucial.

The system can identify video segments containing certain events or activities but not video frames. A lack of motion or activity in the input video sequence may lead to negative matches since no relevant information is extracted from the source. This system has also a strong active-learning component meaning the user feedback is fundamental to refine the results and improve its quality.

It becomes clear that a continuing need exists for a system that is truly scalable, capable of rapidly and efficiently search an image or video within a database of tens of millions of images and videos without requiring a training phase or a learning process, either active or done in an offline manner.

Videos or images of a same object or scene, captured using different user devices, may, in the digital domain, look quite different depending on the sensor used for capturing the image, the ambient light condition, the angle of capture and zoom, camera movement, and so on. Due to this, simple numerical techniques, such as sum-of-difference or such, may not prove to be satisfactory when comparing two media items for similarity or when comparing a media item with other previously stored media items for similarities.

Such a need to automatically search for similar videos may arise in many application areas. For example, in one use case scenario, a user may want to search videos similar to a video he likes. In another use case scenario, a user may wish to identify an object or a location in a video or image. In yet another use case scenario, a service or content provider may want to recommend to a user videos that are similar in content to other videos stored or watched by a user.

One technical problem faced by the above-listed example use cases is the variation in visual depiction of a same object under different conditions. Another technical problem relates to storage and search efficiency. For example, while searching for videos in a database to find videos or scenes within videos similar to a given video segment may be sped up by using a computer instead of a human operator. However, mere computerization may not provide satisfactory user experience when the amount of video stored in the search database is enormous, as already being experienced due to the proliferation of digital media content.

Another technical problem relates to the available bandwidth between a user device where the media item for which a search is to be performed is stored, and the media database, which may be centralized or distributed and stored in a communication network. Due to efficiency in upload time and to minimize having to upload a video for searching, a user may prefer that his searches need not require that the video be uploaded to a search server on the network side.

Yet another problem relates to managing the computational complexity of continually updating the databased of media content with which a requested media item is compared for a match. To keep up with every-growing variety of videos that people are able to see and capture in public domain, video servers have to continually analyze videos and enter the corresponding entries into the search database. With new videos being generated by individual users, artists, broadcast channels, and so on, the task of continually cataloging new videos amounts to not just simply about scaling computations of a video server, but also to intelligently find relationships among the various videos being ingested into the system.

Yet another technical problem rooted in the field of computer technology relates to automation of computer processing and decision-making and task completion by computers, without a need for human intervention. In some cases, e.g., computer automation, driver-less cars, etc., a computer may be asked to, in real-time, recognize real world around it and take decisions consistent with how a human user would have reacted. Providing a technical solution to such a problem entails not just efficient decision-making under the circumstances, but also having the computer continually train itself to be able to handle as-yet-unseen visual situations and then be able to do so efficiently, e.g., with least amount of computations resources and/or network bandwidth, to facilitate deployments in mobile and battery-operated scenarios.

### SUMMARY OF THE INVENTION

The present document describes techniques that can be used, among other things, for images or videos search, recognition and retrieval in large databases containing equal or similar images or videos. In some embodiments, a search target media item is processed to reduce the complexity of search, a search is performed against known media items, and results of the search are presented to a user. In some embodiments, a search system receives as input visual data in the form of an image or a video segment, which is then processed to extract visual descriptors. Each visual descriptor is indexed to a cluster which will vote for all the images and/or video segments in the database that contain an equal or similar visual descriptor to the one being processed. After processing all the visual descriptors, a final rating is generated, in descending order by similarity, starting from the closest image or video from the database that describes the visual data input to the furthest. A final confirmation is done by comparing the visual descriptors from the input visual data to those belonging to the ones with best score. Only after a confirmation is achieved, meaning a match between the input visual data and an image or video from the database is found, the system provides a positive response. These, and other, aspects are described in detail in this document.

In this document, section headings are used to make the understanding of the disclosed technology easy, and do not limit the techniques described in each section to that section only.

### BRIEF DESCRIPTION OF THE DRAWINGS

FIG. 1 is a block diagram illustrating an example of a communication network.
FIG. 2 illustrates an example method of analyzing an input video.
FIG. 3 illustrates an example method of analyzing an input image.
FIG. 4 illustrates an example process of generation of a cluster key.
FIG. 5 illustrates an example process of finding one or more matches in a match database for input media.
FIG. 6A is a flowchart illustrating a method generating a match database.
FIG. 6B is a flowchart illustrating a method of searching for a match for a target media item.
FIG. 7 is a block diagram illustrating a hardware platform on which a process described in this document can be implemented.

### DETAILED DESCRIPTION OF THE INVENTION

### Examples

Some disclosed embodiments relate to a system for image and/or video searches, recognition and retrieval in very large databases containing equal or similar images and/or videos. Various embodiments that combine clustering techniques with the detection, extraction and matching of visual descriptors have been disclosed. In some use cases, a user provides an input media (image or video) that is then processed in order to find a match in a pre-processed database.

In some embodiments, non-repeated visual descriptors are extracted from an input media provided by the user. The visual descriptors are assigned to the corresponding clusters according to a random projection that reduces the descriptor dimensionality and creates a cluster key for each visual descriptor. Each cluster can then vote for all the media segments (images or video segments) that contain that particular visual descriptors, that is, will vote for all the media segments where a visual descriptor with that same cluster key was seen. In the end, a final rating is presented with all the media segments that were found, in descending order by similarity. A final confirmation is made to compare and match the visual descriptors from the input media with those belonging to a pre-determined number (H) best options given by the rating.

All the media (images and videos) in a database can be processed using the same procedure applied to the input media. Each visual descriptor from the processed media will add an entry in a clusters table containing the identification of the media segment (image or video segment) where that visual descriptor was seen. A video is composed by media segments which correspond to a group of frames from the video containing no more than N non-repeated visual descriptors (N an integer), ensuring all the visual descriptors within the same media segment are unique. In the case of processing an image, all the visual descriptors up to N are accepted, since it is a single image.

Some disclosed embodiments for image and/or video search, recognition and retrieval in very large databases containing equal or similar images and/or videos combine clustering techniques with the detection, extraction and matching of visual descriptors. The user provides an input media (image or video) that is processed in order to find a match within a matching database. In some embodiments, a system comprises a i) processing method to add media (images or videos) to the database and; ii) a searching and matching method to find a media (image or video segment) within a pre-processed database.

### Processing Examples

The process of adding a new media (image or video) to the database comprises the use of a visual descriptor extractor, e.g., SIFT descriptors, which are very robust to rotations and zoom. The robustness of the descriptors to such changes in capture characteristics is particularly advantageous when performing clustering since noise could corrupt the transformation and point to wrong clusters thus giving erroneous information in the searching and matching phases.
The inventor's analysis and experimentation showed that splitting an input videos into smaller video segments, offers computational advantage of processing time almost constant in the matching phase. Further, the inventor found it advantageous to segment video segments not by number of frames or duration, but based on the number of visual descriptors generated, e.g., by limiting the maximum number of descriptors in a video segment to N.

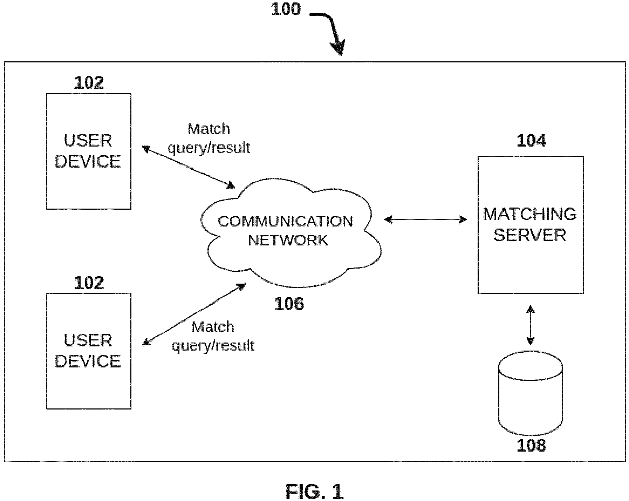

FIG. 1 shows an example communication network 100 in which a user's device 102 is able to communicate with other user devices and a service provider's matching server 104 via a communication network 106. The network 106 may be, e.g., an intranet, the internet, a small area network, a local area network, or a wide area network; and may use a transmission channel that is wired, wireless, or a combination of any of these networks. The user device 102 may be controlled by a user to capture an image or a video using a network interface or a camera. The user device 102 may interface with the server 104 to identify an image or a video sequence stored on the user device 102. During this process, the user device 102 may transmit the image or video sequences in pieces to facilitate processing by the server 104. The matching server 104 may communicate with a matching database 108, which may be locally hosted by the matching server 104 or may be communicatively coupled with the matching server 104 via a communication network, e.g. the network 106. In some embodiments, the matching server 104 may be implemented on a distributed platform, e.g., using cloud computational resources or a cluster of servers communicating with each other over a network connection. In some embodiments, user devices 102 may receive media items, e.g., audio and video segments or clips, either via camera or microphone built into the user devices or as messages from other entities in the network. Users may operate the user devices 102 to exchange messages with the matching server 104 to transmit a match query and receive a response that includes results of the match. The matching server 104 may process a match query as described in the various embodiments herein. The matching server 104 may control the matching database 108 to store a library of known media items along with the corresponding match indices and retrieve results from the matching database 108, as described herein.

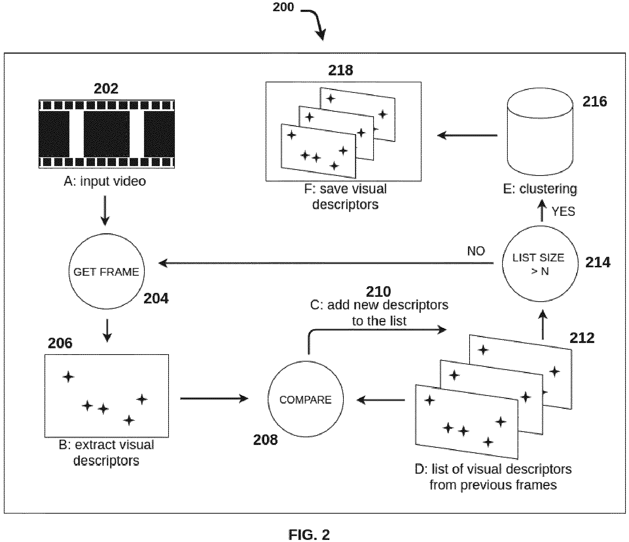

FIG. 2 depicts an example method 200 of analysing a media item such as a video segment, which may flow as follows. In some embodiments, the method 200 may be implemented by the server 104 when building its library of matching database 108. In some embodiments, the method 200 may be implemented by the server 104 to identify a match for a video. In some embodiments, the method 200 may be implemented by a user device 102 for identifying a match for a media item. The video segment may include multiple video frames that are encoded using well-known inter or intra video encoding techniques such as those prescribed by compression standards, e.g., H.264, H.265, motion JPEG, etc. In various embodiments, the server 104 may be implemented on a single hardware platform or may be distributed across multiple hardware platforms or use cloud based computing resources.

At 204, a video frame 202 at time instant i is obtained. The video frame 202 be received at the user device 102, e.g., using a streaming video service, or may be captured and digitized and stored using a local camera/encoding ability of the video capture device.

At 206, the video frame is processed to extract visual descriptors. In some embodiments, the visual descriptors may be obtained by performing certain mathematical operations on the video frame, or portions of the video frame. In computer vision and pattern recognition technical fields, many techniques for obtaining visual descriptors are known. For example, in some embodiments, a visual descriptor may link certain visual features of a video frame with alpha numeric description of the video frame. In some embodiments, visual descriptors may be obtained by processing the video frame to extract local features and/or global features and creating a look-up-table that lists a feature and its value in the particular video frame. In some embodiments, a technique that is robust to variations in the image such as rotation, zoom, intensity change, etc. may be used. For example, Scale Invariant Feature Transform (SIFT), Speeded Up Robust Features (SURF) or Oriented Fast and Rotated BRIEF (ORB) based descriptors may be used. Such computer vision algorithms are specific to the technical field of computer vision, and necessarily rooted in computer technology, and the presently disclosed technology builds on top of, and improves upon certain shortcomings of these algorithms, including complexity and accuracy and the amount of resources needed for satisfactory implementation results.

In some embodiments in which visual descriptor extraction of features of the video frame is used, one or more of the following image processing techniques may be used: extracting features using a scale-space pyramid, re-sampling local images, Hough transform voting, orientation correction, Bayesian probability based voting to determine features and patterns, and so on. In some embodiments, previously processed images may be used as training images to improve SIFT description of a current video frame being analysed.

In some embodiments, the number of visual descriptors extracted from a video frame may be dependent upon the resolution of the image. For example, in some embodiments, higher resolution images may generate a greater number of visual descriptors than lower resolution images. In some embodiments, to keep computational complexity fixed, the total number of descriptors generated per frame may be less than or equal to an upper limit value.

The implementation complexity of the method 200 may be further reduced by exploiting similarities between consecutive frames in a video sequence. Often, video sequences include a number of images captured per second (e.g., 24 to 60 frames per second) and, with the exception of a scene change, neighbouring images are typically visually very similar to each other, with only a few objects in the image changing.

At 208, the number and size of descriptors extracted from the current frame are compared with visual descriptors extracted from previous frames. The visual descriptors extracted from the previous frames may be stored in a list, and the number will be maintained to be less than a target integer N.

During the comparison operation 208, only visual descriptors that are determined to be new are maintained and the remaining visual descriptors can be discarded. For example, when two consecutive frames are visually identical, the second frame may not produce any new visual descriptors compared to the first frame, and thus no new visual descriptors may be added to the list of descriptors. Similarly, if there is a scene change between a previous frame and a current frame, the current frame may produce many new visual descriptors.

At 210, the visual descriptors that are determined to be new are added to the list of visual descriptors (212). The process of adding new descriptors to the list of visual descriptors 212 is repeated until the list is about to have greater than N visual descriptors. This way, the total number of visual descriptors corresponding to a video segment may be upper limited to N.

When video frames are processed using a count and a list as described with respect to FIG. 2, in one advantageous aspect, during a matching phase in which a video sequence is being matched with known visual descriptors, the processing time can be kept almost constant since the number of visual descriptors from the database to compare with will be almost the same between all the segments from all the videos in the database.

In another advantageous aspect, the method 200 can reduce the number of repeated information in the clusters by joining consecutive video frames that will most likely contain similar visual descriptors. For example, consecutive video frames in a video sequence; when there is no scene change, typically tend to have very similar visual content, with visual changes typically happening only due to object movement or camera movement.

In some embodiments, when the method 200 operates on a media item that is a single picture, or is the first frame at the beginning of a video segment, all the extracted visual descriptors up to a limit N will be added to the database due to their innate uniqueness because there is only one image to be added and no redundant or repeated information.

When the descriptors list increases to become greater than N, the visual descriptors obtained are clustered (216). In some embodiments, a clustering function is used to i) reduces the dimensionality of the visual descriptors. The clustering function may also assign a signature, called a cluster key, that may be vectors with R (R an integer) elements.

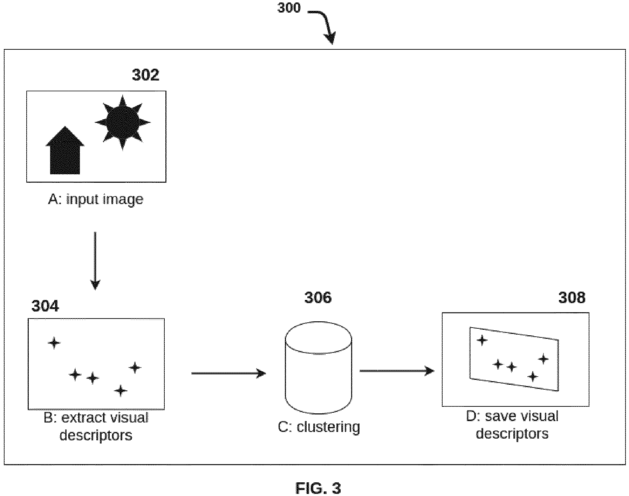

FIG. 3 shows an example method 300 of adding an image to the database. At 302, an input image is analysed, e.g., as described with respect to a video frame in FIG. 2. At 304, visual descriptors are extracted from the image. At 306, a clustering operation, e.g., as described with respect to FIG. 2, is performed on the extracted visual descriptors and at 308, the visual descriptors are stored in the database (e.g., matching database 108).

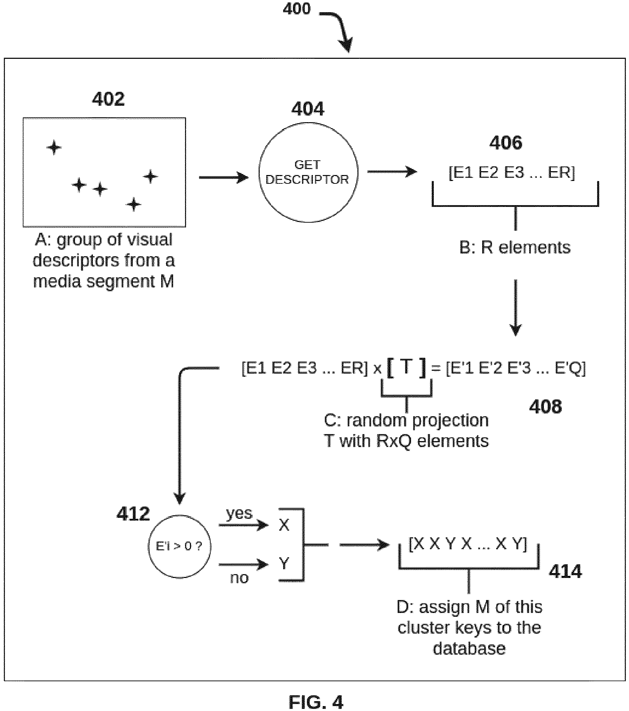

FIG. 4 shows an example method 400 of clustering visual descriptors of a generic group. The clustering method 400 may use, as input 402, a group of visual descriptors from a media segment M that generates a group of descriptors (upper bounded by N).

At 404, descriptors from the media segment are assigned a number of elements, with each element having an alphanumeric value. For example, 406 depicts an example embodiment in which R elements, with each element being able to take values between a lower limit A and an upper limit B (e.g., 0 and 255), are assigned to each element of the descriptor. The total number of combinations is huge and it is typically not possible to represent all these descriptors in single clusters due to memory limitations or noise issues, since a small change would automatically point to a different cluster. It may therefore be beneficial to reduce dimension of the vector, e.g., the total number of unique values possible for the vector. At 408, the dimension of the vector 406 may be reduced to facilitate faster processing. In some embodiments, the dimensionality of the vector 406 is reduced by performing a random projection into another space that can be represented using fewer elements or numbers. The random projection may be performed by multiplying with a transformation matrix T. The elements of the transformation matrix T may be obtained from a zero mean Normal Distribution with standard deviation of D (where D is a real number), represented as N(0; D). This transformation matrix T, of size [R x Q] and rank Q, where Q is less than R, when multiplied by a descriptor vector, will produce Q numbers that could be either positive or negative, since the Normal Distribution is centred in zero, as depicted by vector 410.

At 412, by taking each entry of the descriptor and assigning an alphanumeric value from a set of alphanumeric values. For example, in some embodiments, an alphanumeric value X is assigned when the entry is less than zero and an alphanumeric value Y is assigned otherwise. The end result of this operations is a vector 414, which is a signature of size Q, for that specific descriptor. However, since the dimensionality of the descriptor space is reduced, e.g., from R to Q, each signature may not be unique for a single descriptor. In other words, a given signature 414 may map to multiple descriptors. All the descriptors that generate the same signature, will typically have the same visual or mathematical characteristics and thus, could be grouped together. This signature could be called a clustering key 414 that describes a certain group of descriptors which are related to each other because of similar visual or mathematical characteristics.

The selection of value of Q, which is the dimension of the reduced space on which the initial visual descriptors are projected, presents a trade-off to implementers. The trade-off being that the dimensionality of the reduced space should be such that the system remains robust to noise (variations in elements of the descriptor vector) and still covers a large part of the descriptors space. It may be difficult to fulfil these two conditions simultaneously since, on one hand, a lower Q will deal better with noise, remaining robust. On the other hand, to cover the whole descriptors space a very large Q should be chosen, thus ending up with very few descriptors, or even a single descriptor, in each cluster. Furthermore, the projection matrix may be created a priori, and once only, and then stored to be used during all the system operation, either in the process phase or the searching phase. Searching using the clustering key also is useful since two equal, or almost equal, visual descriptors will point to the same cluster.

While in the above example, clustering is performed using two alphanumeric values, X and Y, in various embodiments, cluster keys may be based on more than two different possible alphanumeric values. For example, four or eight different alphanumeric values may be used. The trade-off for using more cluster values may be based on increased complexity to capture additional possible descriptors for an image. For example, for high resolution images or for mission critical applications where exact match of a media item is desired (e.g., security applications), a higher number of clusters may be used for obtaining a cluster key. After obtaining all the clustering keys, for each visual descriptor, a database associated with the clusters may be updated to reflect that visual descriptor's occurrence frequency. The occurrence frequency may be note down with the identity of the video segment (or image) being processed, where that specific visual descriptor was seen, and the number of times descriptors with that signature were seen (occurrence number) in that specific video segment (or image). The frequency of occurrence information may be used when performing the search for the corresponding media (video or image) as described in this document.

The results of analysis of different video segments, including the cluster keys may then be stored in a databased used for matching. This process is repeated for all the video frames, in case of a video, until the end of the video is reached and all the frames are processed.

### Example searching and matching methods

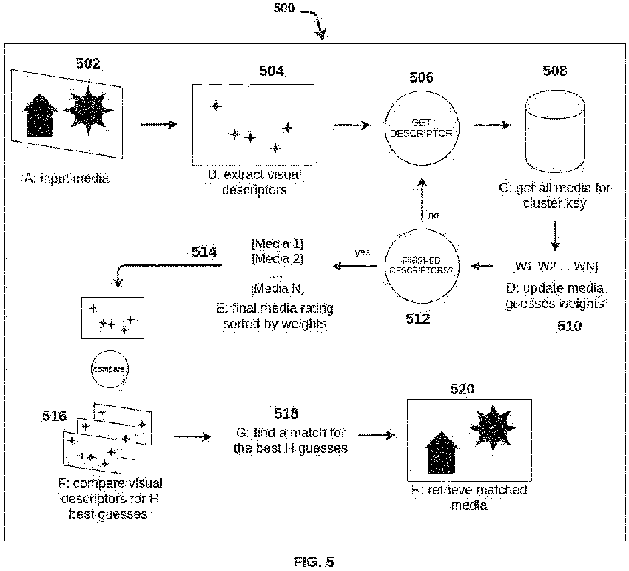

FIG. 5 depicts an example process 500 of searching and matching an image or video segment with the database of previously analysed videos. At 502, input media, e.g., an image and a video sequence, is received. At 504, all the visual descriptors present in the searching image or video segment are extracted. In the case of a video segment, all visual descriptors belonging to all the video frames are extracted and grouped (506). After extracting and grouping all the visual descriptors, a random projection, e.g., as previously described, is applied to find the cluster key for each descriptor.

Each visual descriptor will point to a certain cluster, identified by its cluster key, and contributes to a voting system. The voting system is used to rank the media (images or video segments) within the database, by similarity. Each entry in the clusters table contains the id of a certain video segment (or image) where that descriptor and the number of times descriptors with that same signature were seen (occurrence number) in that specific video segment (or image).

By querying one cluster key, the search process can obtain id's of all the video segments or images from all the media in the matching database where that specific visual descriptor was seen, as long as their occurrence number q (508). Therefore, for a specific cluster key, the weight w associated to a media (image or video segment) i is given by wᵢ = qᵢ / sum (q). The total weight for each media is cumulative meaning wᵢ can increase its value based on the weights given by other clusters (510). After all the visual descriptors are processed (512) a final rating is presented, sorted in descending order by similarity (514). If the searching media exists in the search database, the correct result will appear as the top guess or within the best H guesses, with H being usually very low (516). After obtaining the rating, a final confirmation can be made to avoid false positives, since any image or video segment fed to the system would generate a rating (516). The final confirmation is done by comparing the extracted visual descriptors to those belonging to the best H guesses, already stored during the processing phase (518). This comparison is done by applying the k-nearest neighbour algorithm and choosing as a final match the best guess whose total number of matches is higher than a threshold and correspond, at least, to a certain percentage of the total number of matches for all the guesses (520).

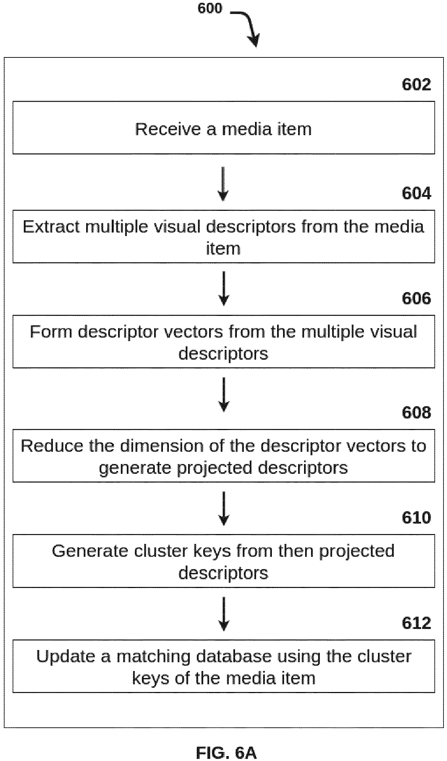

FIG. 6A depicts an example of a method 600 of analysing media items for adding the media items to a database of reference media items or known media items. For example, media items that are known to be popular, or are expected to be often queries by users, e.g., popular travel destinations, newly released music videos, movies, etc. may be added to this database by performing the processing described in this document.

The method 600 includes, at 602, receiving a media item. The media item may be an image or a video segment. The image or a video segment may be in a variety of formats, uncompressed or compressed, such as MP4, AVI, JPEG, GIF, PNG, bitmap, etc.

The method 600 includes, at 604, extracting multiple visual descriptors from the media item. As described with reference to, e.g., FIG. 2 to FIG. 5, in some embodiments, the descriptor extraction may include using a SIFT based image processing to obtain SIFT descriptors.

The method 600 includes, at 606, formulating a descriptor vector for each visual descriptor. As described, e.g., with respect to FIG. 2 to FIG. 5, the description vector may be formulated on a per image or a per video segment basis. Each descriptor vector may, e.g., represent a fixed number of alphanumeric entries that described certain characteristics of the image. The entries may relate to one or more of an average image intensity, local edges, frequency content in the image, corners in the image, orientation of corners in the image, a dominant colour, contours or shapes, etc. The total number of visual descriptors generated for a given frame may depend on the visual content. For example, a blank screen image may generate very few (zero to ten) descriptors while a visually busy image may generate 10 to 1000 or more visual descriptors.

The method 600 includes, at 608, reducing dimension of each descriptor to generate a projected descriptor. In some embodiments, e.g., as described with respect to FIG. 2 to FIG. 5, vector dimension may be reduced to control computational complexity. A rectangular matrix may, for example, be used to pre-multiply the descriptor to reduce the dimension of the description vector. In some embodiments, for example, for a visual descriptor extracted from a media item, an extraction window of a certain pixel size (e.g., 16x16 pixel) may be centred at the location in the media item where corresponding to a keypoint. A keypoint can be an image corner with a strong response at different scales and characterized by an orientation vector given by gradient analysis within a certain neighbour region. Next, the extraction window is divided in E (E an integer, e.g., 16) smaller sub-windows and for each subwindow, B (B an integer, e.g., 8) orientation histogram bins are obtained, totalizing D bins (e.g., 128 bins) for the whole set that characterize the visual descriptor for that particular keypoint.

At 600, the method includes, at 610, generates a cluster key from each projected descriptor. In some embodiments, the generation of a cluster key may be done by dividing, a video media item into a plurality of video segments, each video segments comprising a number of video pictures such that a total number of descriptors extracted for all video pictures in a video segment is below an upper threshold. In some embodiments, the cluster keys are obtained by replacing, for each entry of each projected descriptor, the entry with a corresponding alphanumeric value from a constellation of reduced symbols.

At 600, the method includes, at 612, updating a matching database using the cluster key of the media item. The matching database may contain e.g., a list of cluster keys that the searches have found, and the corresponding media sequences. In some embodiments, once the media item is analysed, the matching database is updated to include the media item along with the cluster key.

It will be appreciated that the method 600 may be executed on a matching server 104 in a manner that is asynchronous, or independent, of the searches made. For example, after new content is analyzed and the corresponding cluster keys are added to the matching database, the corresponding cluster keys and content will be available for matching almost instantaneously after the media item is analyzed.

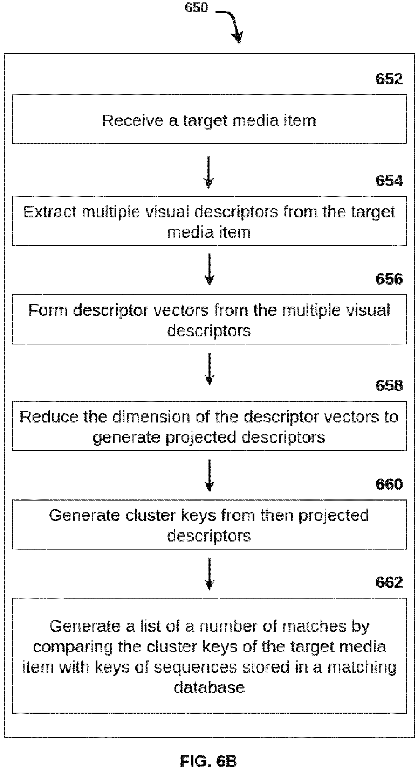

In some embodiments, a server apparatus for analyzing media items to extract information useful for matching may include a memory and a processor that reads and executes instructions from the memory and performs various operations, e.g., as described with respect to method 600. FIG. 6B depicts an example method 650 of matching a target media item for which a matching is performed. The method 650 may be performed entirely on the matching server 104. For example, in some embodiments, the user device 102 may convey an entire media item to be matched to the matching server 104 and instruct the matching server 104 to find a match. In some embodiments, initial part of processing of media item may be performed on the user device and upload bandwidth may be saved by the user device having to send only cluster keys or only reduced dimension description vectors to the matching server 104.

At 652, a target media item may be received, for which a search is desired by a user. The target media item may be a photograph snapped by the user, or received by the user via the internet or may be a video captured by the user or a video downloaded by the user or to the user, and so on. At 654, multiple visual descriptors are extracted from the target media item, e.g., as described with respect to operation 604.

At 656, a descriptor vector may be formulated for each visual descriptor e.g., as described with respect to operation 606.
At 658, the dimension of each descriptor vector is reduced to generate a projected descriptor, e.g., as described with respect to operation 608.
At 660, a cluster key is generated from the projected descriptor, e.g., as described with respect to operation 610.

At 662, a list of a number of matches is generated for the target media item. The list is generated by comparing the cluster key of the target media item with keys of sequences stored in the matching database. In some embodiments, the number of items shown in the list may be user-configurable. In some embodiments, the reduction in dimension of the target media item may be performed on the user device, and only the reduced data, e.g., cluster keys, may be transferred or uploaded, to a network server, where a search with a media database may be performed. The division of computations performed on the user device and in the network advantageously allows implementers a trade-off in a user device's ability to perform computations and the upload bandwidth.

In some embodiments, a server apparatus for analyzing media items to extract information useful for matching may include a memory and a processor that reads and executed instructions from the memory and performs various operations, e.g., as described with respect to method 650. The methods described with respect to FIGs. 6A and 6B may be implemented by processing on each video frame or picture as a unit of visual descriptor generation. However, in some embodiments, e.g., when the video frame or the picture has very high resolution, e.g., a resolution greater than 1920x1080, which is generally considered high-definition, the picture may be divided into multiple sub-pictures (e.g., four quadrants) and each sub-picture may be used as a unit for visual descriptor extraction to reduce the complexity of operation.

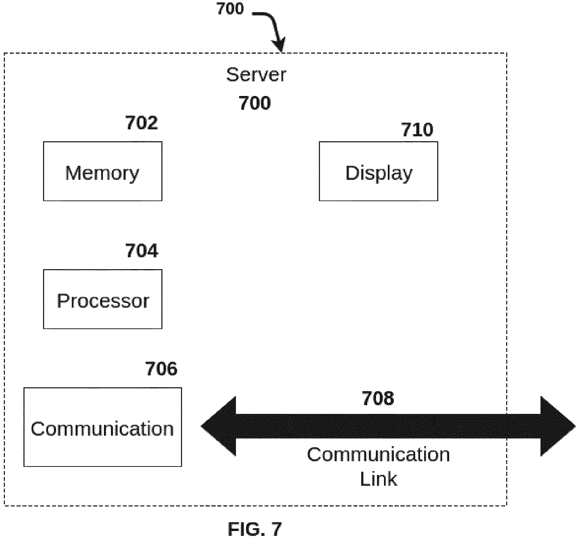

FIG. 7 shows an example hardware platform 700 that could be used to implement the server 106. The server 700 includes memory 702, a processor 704 and a communication module 706. The memory 702 may store program code or data during operation of the server 700. The program code may be read by the processor 704 to implement methods described in the present document. The communication module 706 may control reception and transmission of data over communication links 708, e.g., an ingest IP connection and an outgoing IP connection. The server 700 may optionally include a display module 710 that may provide information to a display user interface.

It will be appreciated that image and video recognition schemes in which a target video segment or an image is matched with a match database of previously analyzed video segments and images. It will further be appreciated that the disclosed matching techniques reduce complexity of matching operation by reducing dimension of a descriptor that represents the visual content of video images. In another aspect, the disclosed techniques use a complexity parameter that can be adjusted to control the complexity of the match operation by controlling the descriptors generated on a per-video segment basis.

It will further be appreciated that the disclosed media item matching techniques can be robust to image and video variations due to camera angle, exposure, rotation, etc. It will further be appreciated that new media items can be added to the match database without having to re-build the database.

The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output.

The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method of analyzing a media item for use in media matching, comprising:
receiving a media item, wherein the media item comprises one or more pictures; extracting multiple visual descriptors from the media item;
forming descriptor vectors from the multiple visual descriptors;
reducing a dimension of the descriptor vectors to generate projected descriptors;
creating cluster keys from the projected descriptors; and
updating a matching database using the cluster keys generated from the media item.

2. The method of claim 1, wherein the forming the descriptor vectors comprises:
forming the descriptor vectors by using only unique visual descriptors from the multiple visual descriptors.

3. The method of claim 1, wherein the reducing the dimension includes:
multiplying the descriptor vectors by a rectangular matrix.

4. The method of claim 1, wherein the creating the cluster key comprises:
dividing, a video media item into a plurality of video segments, each video segments comprising a number of video pictures such that a total number of descriptors extracted for all video pictures in a video segments is below an upper threshold.

5. The method of claim 1, wherein the extracting multiple visual descriptors comprises calculating a scale invariant feature transform of the media item.

6. The method of claim 1, wherein the creating the cluster key comprises:
replacing, for each entry of the projected descriptor, the entry with a corresponding value from a constellation of reduced symbols, wherein the constellation of reduced symbols comprises a first alphanumeric value and a second alphanumeric value and wherein the replacing comprises replacing every value in the projected descriptors with one of the first alphanumeric value and the second alphanumeric value.

7. The method of claim 1, further comprising:
updating the matching database to include the media item along with the cluster key.

8. A server apparatus for analyzing media items to extract information useful for matching, comprising:
a memory; and
a processor that reads and executes instructions from the memory, including instructions for implementing method recited in Claims 1-7.

9. A method of finding a match in a match database with a target media, comprising:
receiving a target media item, wherein the target media item comprises one or more pictures;
extracting multiple visual descriptors from the target media item;
formulating descriptor vectors from the multiple visual descriptors;
reducing dimensions of the descriptor vectors to generate projected descriptors;
creating cluster keys from the projected descriptors; and
generating a list of a number of matches by comparing cluster keys of the target media item with keys of sequences stored in the matching database.

10. The method of claim 9, wherein the forming the description vector comprises:
forming the descriptor vectors by using only unique visual descriptors from the multiple visual descriptors.

11. The method of claim 9, wherein the reducing the dimension includes:
multiplying the descriptor vectors by a rectangular matrix.

12. The method of claim 9, wherein the creating the cluster key comprises:
dividing, the target video media item into a plurality of video segments, each video segments comprising a number of video pictures such that a total number of descriptors extracted for all video pictures in a video segments is below an upper threshold.

13. The method of claim 9, wherein the extracting multiple visual descriptors comprises calculating a scale invariant feature transform of the media item.

14. The method of claim 9, wherein the creating the cluster key comprises:
replacing, for each entry of the projected descriptor, the entry with a corresponding value from a constellation of reduced symbols, wherein the constellation of reduced symbols comprises a first alphanumeric value and a second alphanumeric value and wherein the replacing comprises replacing every value in the projected descriptors with one of the first alphanumeric value and the second alphanumeric value.

15. An apparatus for finding a match in a match database with a target media, comprising:
a match database that stores information about previously analyzed media items; and
a processor that implements a matching method recited in any of claims 9-14.

16. A computer program product on which computer-readable code is stored, the code, when read by a processor, causing the processor to implement a method recited in any of claims 1 to 7 or 9 to 14.
